# EUROPEAN PATENT APPLICATION

(11) **EP 4 572 371 A1**
(43) Date of publication of application: **18.06.2025**
(21) Application number: 23858959.2
(22) Date of filing: 18.07.2023
(51) Int. Cl.: H04W 24/02

(54) **METHOD FOR RECORDING RANDOM ACCESS REPORT, AND COMMUNICATION APPARATUS**

(30) Priority: 31.08.2022 CN 202211055181
(71) Applicant: Huawei Technologies Co., Ltd., Shenzhen, Guangdong 518129 (CN)
(72) Inventor: WANG, Fanfan, Shenzhen, Guangdong 518129 (CN); GENG, Tingting, Shenzhen, Guangdong 518129 (CN)
(74) Representative: Goddar, Heinz J.
(86) International application number: PCT/CN2023/107858
(87) International publication number: WO 2024/045923

(57) **Abstract**

This application provides a random access report recording method and a related communication apparatus. A terminal device receives configuration information from a network device, where the configuration information includes a set of random access resources for a random access feature, and the random access feature includes at least one of the following: a reduced capability terminal device feature, a small data transmission SDT feature, a coverage enhancement feature, and a network slicing feature. When one or more random access features including at least the small data transmission SDT feature meet a condition for triggering random access, the terminal device initiates a random access procedure based on the configuration information, where the random access procedure includes at least random access-based small data transmission. The terminal device records a first random access report, where the first random access report includes information related to the random access procedure. According to the foregoing solution, recording of an SDT random access procedure is implemented.

## Description

This application claims priority to Chinese Patent Application No. 202211055181.9, filed with the China National Intellectual Property Administration on August 31, 2022 and entitled "RANDOM ACCESS REPORT RECORDING METHOD AND COMMUNICATION APPARATUS", which is incorporated herein by reference in its entirety.

### TECHNICAL FIELD

Embodiments of this application relate to the communication field, and in particular, to a random access report recording method and a communication apparatus.

### BACKGROUND

A small data transmission (small data transmission, SDT) mechanism allows a terminal device to complete data transmission in a radio resource control inactive (RRC_inactive) state when only a small amount of uplink data needs to be sent, without entering a radio resource control connected (RRC_connected) state. SDT avoids signaling overheads and energy consumption that are caused by frequent triggering of an RRC connection resume procedure.

Currently, the SDT may be classified into configured grant-based SDT (Configured Grant-based SDT, CG-SDT) and random access-based SDT (Random Access-based SDT, RA-SDT). The RA-SDT further includes 4-step contention-based random access (4-step CBRA) and 2-step contention-based random access (2-step CBRA). In the 4-step CBRA, the terminal device sends an RRC resume request message (namely, an RRC resume request message) and SDT data by using a message 3 (namely, a message 3, Msg3). In the 2-step CBRA, the terminal device sends an RRC resume request message and SDT data by using a message A (namely, a message A, MsgA).

In a conventional random access procedure, to avoid a random access failure caused by an inappropriate configuration on a network side, a terminal device can record information in the random access procedure and generate a random access report (an RACH report) corresponding to the random access procedure. The random access report includes a parameter that is related to the random access procedure and that is recorded by the terminal device, and is used by the network side to identify a problem in the random access procedure and optimize a random access configuration in a timely manner, to improve a success rate of the random access procedure of the terminal device. However, there is currently no random access report recording scheme related to an SDT random access procedure (namely, random access-based SDT).

### SUMMARY

This application provides a random access report recording method and a communication apparatus, so that a terminal device records a random access report related to random access-based SDT.

According to a first aspect, this application provides a random access report recording method. The random access report recording method may be performed by a terminal device or may be performed by a component (for example, a processor, a chip, or a chip system) of the terminal device. The terminal device is used as an example. In the method, the terminal device receives configuration information from a network device, where the configuration information includes a set of random access resources for a random access feature, and the random access feature includes at least one of the following: a reduced capability terminal device feature, a small data transmission SDT feature, a coverage enhancement feature, and a network slicing feature. When one or more random access features including at least the small data transmission SDT feature meet a condition for triggering random access, the terminal device selects a random access resource and initiates a random access procedure based on the configuration information. The terminal device records a first random access report, where the first random access report includes information related to the random access procedure.

With reference to the first aspect, in a possible implementation, if the random access resource is applicable to the one or more random access features including at least the SDT feature, the random access procedure includes at least random access-based small data transmission, and the terminal device records the first random access report, where the first random access report includes the information related to the random access procedure.

With reference to the first aspect, in another possible implementation, if the random access resource is applicable to at least one or more random access features, and the one or more random access features do not include the SDT feature, the random access procedure does not include random access-based small data transmission, and the terminal device records the first random access report, where the first random access report includes the information related to the random access procedure.

With reference to the first aspect, in a possible implementation, the configuration information further includes priority information of at least one random access feature, where the priority information of the random access feature is used by the terminal device to determine, from the set of random access resources, an available random access resource for the random access procedure, and the random access resource is applicable to all or some of the one or more random access features including at least the SDT feature. For example, the terminal device initiates a random access procedure for all or some random access features.

With reference to the first aspect, in a possible implementation, the information related to the random access procedure in the first random access report includes one or more of the following:
first indication information, where the first indication information indicates at least one random access feature triggering the random access procedure, and the at least one random access feature includes the SDT feature;
the priority information of the at least one random access feature; and
second indication information, where the second indication information indicates a random access feature to which an available random access resource selected by the terminal device from the set of random access resources is applicable (corresponding), and the random access resource is applicable to all or some of the one or more random access features including at least the SDT feature; and optionally, the random access feature to which the random access resource is applicable is all or some of the one or more random access features including at least the SDT feature, or may be one or more specific random access features to which the random access resource is not applicable.

In this implementation, content of the information related to the random access procedure in the first random access report is determined, so that after receiving the first random access report, the network device determines, based on any one of the first indication information, the feature priority information, or the second indication information, that the first random access report is a random access report recording SDT random access rather than a random access report in a conventional technology.

With reference to the first aspect, in a possible implementation, the information related to the random access procedure further includes any one or more of the following: random access cell identifier information, random access frequency information, time-frequency domain configuration information, signal quality measurement information, indication information indicating that the signal quality measurement information meets a quality threshold, beam information for performing a random access attempt, a data volume to be transmitted during 2-step random access, and physical uplink shared channel PUSCH configuration information of the 2-step random access.

In this application, the terminal device can record an SDT-related first random access report. Therefore, a network side optimizes a random access configuration based on the first random access report, thereby improving a success rate of an SDT random access procedure of the terminal device.

With reference to the first aspect, in a possible implementation, the method further includes at least one of the following:
the terminal device sends third indication information to the network device, where the third indication information indicates whether the terminal device supports recording of an SDT-related random access report; or
the terminal device sends third indication information to the network device, where the third indication information indicates that the terminal device supports recording of an SDT-related random access report.

With reference to the first aspect, in a possible implementation, the method further includes: The terminal device receives fourth indication information from the network device, where the fourth indication information indicates whether the terminal device records the SDT-related random access report; or
the terminal device sends fourth indication information to the network device, where the fourth indication information indicates that the terminal device records the SDT-related random access report.

In this implementation, the terminal device can record the SDT-related random access report or does not record the SDT-related random access report based on the received fourth indication information. This helps the network device flexibly control whether the terminal device enables a function of recording the SDT-related random access report.

With reference to the first aspect, in a possible implementation, the fourth indication information includes a first threshold, and the first threshold is an upper limit of a number of first random access reports recorded by the terminal device. That the terminal device records a first random access report includes: The terminal device records the first random access report when a number of historical first random access reports recorded by the terminal device is less than the first threshold.

Optionally, the terminal device does not record the first random access report when a number of historical first random access reports recorded by the terminal device is greater than or equal to a first threshold.

With reference to the first aspect, in a possible implementation, the method further includes: The terminal device sends fifth indication information to the network device, where the fifth indication information indicates availability of the first random access report.

In this implementation, the terminal device can send the fifth indication information to the network device, to indicate that the terminal device has an available first random access report. Optionally, the fifth indication information may further indicate a type of the first report. For example, the fifth indication information indicates whether the random access report is a legacy RACH report or an SDT-related RACH report. This helps the network device determine whether to obtain the first random access report from the terminal device, after receiving the fifth indication information.

With reference to the first aspect, in a possible implementation, the method further includes: The terminal device receives sixth indication information from the network device, where the sixth indication information indicates the terminal device to report the first random access report; and the terminal device sends the first random access report to the network device.

According to a second aspect, this application provides a random access report recording method. The random access report recording method may be performed by a network device (for example, an access network device) or may be performed by a component (for example, a processor, a chip, or a chip system) of the network device. The network device is used as an example. In the method, the network device sends configuration information to a terminal device, where the configuration information includes a set of random access resources for a random access feature, and the random access feature includes at least one of the following: a reduced capability terminal device feature, a small data transmission SDT feature, a coverage enhancement feature, and a network slicing feature. Based on the configuration information, the terminal device selects a random access resource and initiates a random access procedure. Optionally, a network may further configure the terminal device to record a first random access report, where the first random access report includes information related to the random access procedure.

With reference to the second aspect, in a possible implementation, the configuration information further includes priority information of at least one random access feature, where the priority information of the random access feature is used to determine an available random access resource for the random access procedure based on the set of random access resources, and the random access resource is applicable to all or some of one or more random access features including at least the SDT feature.

With reference to the second aspect, in a possible implementation, the information related to the random access procedure in the first random access report includes one or more of the following:
first indication information, where the first indication information indicates at least one random access feature triggering the random access procedure, and the at least one random access feature includes the SDT feature;
the priority information of the at least one random access feature; and
second indication information, where the second indication information indicates a random access feature to which the available random access resource selected by the terminal device from the set of random access resources is applicable (corresponding), and the random access resource is applicable to all or some of the one or more random access features including at least the SDT feature; and optionally, the random access feature to which the random access resource is applicable is all or some of the one or more random access features including at least the SDT feature, or may be one or more specific random access features to which the random access resource is not applicable.

With reference to the second aspect, in a possible implementation, the information related to the random access procedure further includes any one or more of the following: random access cell identifier information, random access frequency information, time-frequency domain configuration information, signal quality measurement information, indication information indicating that the signal quality measurement information meets a quality threshold, beam information for performing a random access attempt, a data volume to be transmitted during 2-step random access, and physical uplink shared channel PUSCH configuration information of the 2-step random access.

With reference to the second aspect, in a possible implementation, the method further includes: The network device receives third indication information from the terminal device, where the third indication information indicates whether the terminal device supports recording of an SDT-related random access report; or the network device receives third indication information from the terminal device, where the third indication information indicates that the terminal device supports recording of an SDT-related random access report.

With reference to the second aspect, in a possible implementation, the method further includes: The network device sends fourth indication information to the terminal device, where the fourth indication information indicates whether the terminal device records the SDT-related random access report; or the network device receives fourth indication information from the terminal device, where the fourth indication information indicates the terminal device to record the SDT-related random access report.

With reference to the second aspect, in a possible implementation, the fourth indication information includes a first threshold, and the first threshold is an upper limit of a number of first random access reports recorded by the terminal device.

With reference to the second aspect, in a possible implementation, the method further includes: The network device receives fifth indication information from the terminal device, where the fifth indication information indicates availability of the first random access report. Optionally, the fifth indication information may further indicate a type of the first report. For example, the fifth indication information indicates whether the random access report is a legacy RACH report or an SDT-related RACH report.

With reference to the second aspect, in a possible implementation, the method further includes: The network device sends sixth indication information to the terminal device, where the sixth indication information indicates the terminal device to report the first random access report; and the network device receives the first random access report from the terminal device.

It should be noted that specific implementations and beneficial effects of this aspect are similar to some implementations of the first aspect. For details, refer to specific implementations and beneficial effects of the first aspect. Details are not described herein again.

According to a third aspect, this application provides a communication apparatus. The communication apparatus may be a terminal device or may be a component (for example, a processor, a chip, or a chip system) in a terminal device. The communication apparatus includes a transceiver module and a processing module. The transceiver module is configured to receive configuration information from a network device, where the configuration information includes a set of random access resources for a random access feature, the random access feature includes a small data transmission SDT feature, and the set of random access resources includes a random access resource for a small data transmission SDT random access feature. The processing module is configured to: initiate a random access procedure based on the configuration information when one or more random access features including at least the SDT feature meet a condition for triggering random access, and record a first random access report, where the first random access report includes information related to the random access procedure.

With reference to the third aspect, in a possible implementation, the random access feature further includes a reduced capability terminal device feature, a coverage enhancement feature, or a network slicing feature.

With reference to the third aspect, in a possible implementation, if the one or more random access features triggering the random access procedure include the SDT feature, and the random access resource is applicable to the one or more random access features including at least the SDT feature, the random access procedure includes at least random access-based small data transmission. The processing module is configured to record the first random access report, where the first random access report includes the information related to the random access procedure.

With reference to the third aspect, in another possible implementation, if the one or more random access features triggering the random access procedure include the SDT feature, the random access resource is applicable to at least one or more random access features, and the one or more random access features do not include the SDT feature, the random access procedure does not include random access-based small data transmission. The processing module is configured to record the first random access report, where the first random access report includes the information related to the random access procedure.

With reference to the third aspect, in a possible implementation, the information related to the random access procedure in the first random access report includes one or more of the following:
first indication information, where the first indication information indicates at least one random access feature triggering the random access procedure, and the at least one random access feature includes the SDT feature;
priority information of the at least one random access feature; and
second indication information, where the second indication information indicates a random access feature to which an available random access resource selected by the terminal device from the set of random access resources is applicable (corresponding), and the random access resource is applicable to all or some of the one or more random access features including at least the SDT feature; and optionally, the random access feature to which the random access resource is applicable is all or some of the one or more random access features including at least the SDT feature, or may be one or more specific random access features to which the random access resource is not applicable.

With reference to the third aspect, in a possible implementation, the processing module is further configured to determine an available random access resource for the random access procedure based on the set of random access resources and the priority information of the random access feature, where the random access resource is applicable to all or some of the one or more random access features including at least the SDT feature. For example, the processing module is configured to initiate a random access procedure for all or some random access features.

With reference to the third aspect, in a possible implementation, the transceiver module is further configured to send third indication information to the network device, where the third indication information indicates whether the terminal device supports recording of an SDT-related random access report; or the transceiver module is further configured to send third indication information to the network device, where the third indication information indicates that the terminal device supports recording of an SDT-related random access report.

With reference to the third aspect, in a possible implementation, the transceiver module is further configured to receive fourth indication information from the network device, where the fourth indication information indicates whether the terminal device records the SDT-related random access report; or the transceiver module is further configured to receive fourth indication information from the network device, where the fourth indication information indicates that the terminal device records the SDT-related random access report.

With reference to the third aspect, in a possible implementation, the fourth indication information includes a first threshold, and the first threshold is an upper limit of a number of first random access reports recorded by the terminal device. The processing module is specifically configured to record the first random access report when a number of recorded historical first random access reports is less than the first threshold.

With reference to the third aspect, in a possible implementation, the transceiver module is further configured to send fifth indication information to the network device, where the fifth indication information indicates availability of the first random access report. Optionally, the fifth indication information may further indicate a type of the first report. For example, the fifth indication information indicates whether the random access report is a legacy RACH report or an SDT-related RACH report.

With reference to the third aspect, in a possible implementation, the transceiver module is further configured to: receive sixth indication information from the network device, where the sixth indication information indicates the terminal device to report the first random access report; and send the first random access report to the network device.

It should be noted that specific implementations and beneficial effects of this aspect are similar to some implementations of the first aspect. For details, refer to specific implementations and beneficial effects of the first aspect. Details are not described herein again.

According to a fourth aspect, this application provides a communication apparatus. The communication apparatus may be a network device or may be a component (for example, a processor, a chip, or a chip system) in a network device. The communication apparatus includes a transceiver module and a processing module. The processing module is configured to determine configuration information, where the configuration information includes a set of random access resources for a random access feature, the random access feature includes a small data transmission SDT feature, and the set of random access resources includes a random access resource for a small data transmission SDT random access feature. Based on the configuration information, a terminal device selects a random access resource and initiates a random access procedure. Optionally, a network may further configure the terminal device to record a first random access report, where the first random access report includes information related to the random access procedure. The transceiver module is configured to send the configuration information to the terminal device.

With reference to the fourth aspect, in a possible implementation, the random access feature further includes a reduced capability terminal device feature, a coverage enhancement feature, or a network slicing feature.

With reference to the fourth aspect, in a possible implementation, the configuration information further includes priority information of at least one random access feature, where the priority information of the random access feature is used to determine an available random access resource for the random access procedure based on the set of random access resources, and the random access resource is applicable to all or some of one or more random access features including at least the SDT feature.

With reference to the fourth aspect, in a possible implementation, the information related to the random access procedure includes one or more of the following:
first indication information, where the first indication information indicates at least one random access feature triggering the random access procedure, and the at least one random access feature includes the SDT feature;
the priority information of the at least one random access feature; and
second indication information, where the second indication information indicates a random access feature to which an available random access resource selected by the terminal device from the set of random access resources is applicable (corresponding), and the random access resource is applicable to all or some of the one or more random access features including at least the SDT feature; and optionally, the random access feature to which the random access resource is applicable is all or some of the one or more random access features including at least the SDT feature, or may be one or more specific random access features to which the random access resource is not applicable.

With reference to the fourth aspect, in a possible implementation, the transceiver module is further configured to receive third indication information from the terminal device, where the third indication information indicates whether the terminal device supports recording of an SDT-related random access report; or the transceiver module is further configured to receive third indication information from the terminal device, where the third indication information indicates that the terminal device supports recording of an SDT-related random access report.

With reference to the fourth aspect, in a possible implementation, the transceiver module is further configured to send fourth indication information to the terminal device, where the fourth indication information indicates whether the terminal device records the SDT-related random access report; or the transceiver module is further configured to send fourth indication information to the terminal device, where the fourth indication information indicates that the terminal device records the SDT-related random access report.

Optionally, the fourth indication information includes a first threshold, and the first threshold is an upper limit of a number of first random access reports recorded by the terminal device.

With reference to the fourth aspect, in a possible implementation, the transceiver module is further configured to receive fifth indication information from the terminal device, where the fifth indication information indicates availability of the first random access report. Optionally, the fifth indication information may further indicate a type of the first report. For example, the fifth indication information indicates whether the random access report is a legacy RACH report or an SDT-related RACH report.

With reference to the fourth aspect, in a possible implementation, the transceiver module is further configured to: send sixth indication information to the terminal device, where the sixth indication information indicates the terminal device to report the first random access report; and receive the first random access report from the terminal device.

It should be noted that specific implementations and beneficial effects of this aspect are similar to some implementations of the second aspect. For details, refer to specific implementations and beneficial effects of the second aspect. Details are not described herein again.

According to a fifth aspect, an embodiment of this application provides a communication apparatus. The communication apparatus may be the terminal device in the foregoing implementations or may be a chip in the terminal device. The communication apparatus may include a processing module and a transceiver module. When the communication apparatus is the terminal device, the processing module may be a processor, and the transceiver module may be a transceiver. The terminal device may further include a storage module, and the storage module may be a memory. The storage module is configured to store instructions, and the processing module executes the instructions stored in the storage module, to enable the terminal device to perform the method according to the first aspect or any one of the implementations of the first aspect. When the communication apparatus is a chip in the terminal device, the processing module may be a processor, and the transceiver module may be an input/output interface, a pin, a circuit, or the like. The processing module executes instructions stored in a storage module, to enable the terminal device to perform the method according to the first aspect or any one of the implementations of the first aspect. The storage module may be a storage module (for example, a register or a cache) in the chip, or may be a storage module (for example, a read-only memory or a random access memory) that is in the terminal device and that is located outside the chip.

According to a sixth aspect, an embodiment of this application provides a communication apparatus. The communication apparatus may be the access network device in the foregoing implementations or may be a chip in the access network device. The communication apparatus may include a processing module and a transceiver module. When the communication apparatus is the access network device, the processing module may be a processor, and the transceiver module may be a transceiver. The access network device may further include a storage module, and the storage module may be a memory. The storage module is configured to store instructions, and the processing module executes the instructions stored in the storage module, to enable the terminal device to perform the method according to the second aspect or any one of the implementations of the second aspect. When the communication apparatus is a chip in the access network device, the processing module may be a processor, and the transceiver module may be an input/output interface, a pin, a circuit, or the like. The processing module executes instructions stored in a storage module, to enable the terminal device to perform the method according to the second aspect or any one of the implementations of the second aspect. The storage module may be a storage module (for example, a register or a cache) in the chip, or may be a storage module (for example, a read-only memory or a random access memory) that is in the access network device and that is located outside the chip.

According to a seventh aspect, this application provides a communication apparatus. The apparatus may be an integrated circuit chip. The integrated circuit chip includes a processor. The processor is coupled to a memory. The memory is configured to store a program or instructions. When the program or the instructions are executed by the processor, the communication apparatus is enabled to perform the method described in any implementation of the foregoing aspects.

According to an eighth aspect, an embodiment of this application provides a computer program product including instructions. When the computer program product runs on a computer, the computer is enabled to perform the method described in any implementation of the foregoing aspects.

According to a ninth aspect, an embodiment of this application provides a computer-readable storage medium including instructions. When the instructions are run on a computer, the computer is enabled to perform the method described in any implementation of the foregoing aspects.

According to a tenth aspect, an embodiment of this application provides a communication system. The communication system includes the terminal device according to the first aspect or any one of the implementations of the first aspect and the network device according to the second aspect or any one of the implementations of the second aspect.

### BRIEF DESCRIPTION OF DRAWINGS

FIG. 1A is a diagram of a network architecture to which a random access report recording method is applicable according to this application;
FIG. 1B is a diagram of a structure of a network device related to a random access report recording method according to this application;
FIG. 1C is a diagram of another structure of a network device related to a random access report recording method according to this application;
FIG. 2 is a flowchart of a random access report recording method according to this application;
FIG. 3 is another flowchart of a random access report recording method according to this application;
FIG. 4 is a diagram of an embodiment of a communication apparatus according to this application;
FIG. 5 is a diagram of another embodiment of a communication apparatus according to this application; and
FIG. 6 is a diagram of still another embodiment of a communication apparatus according to this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application.

In the specification, claims, and accompanying drawings of this application, the terms "first", "second", "third", "fourth", and so on (if existent) are intended to distinguish between similar objects but do not necessarily indicate a specific order or sequence. It should be understood that the terms used in such a way are interchangeable in proper circumstances so that the embodiments of this application described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly enumerated steps or units, but may include other steps or units not expressly enumerated or inherent to such a process, method, product, or device.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

For ease of understanding, the following first describes a system architecture and an application scenario of a random access report recording method provided in this application.

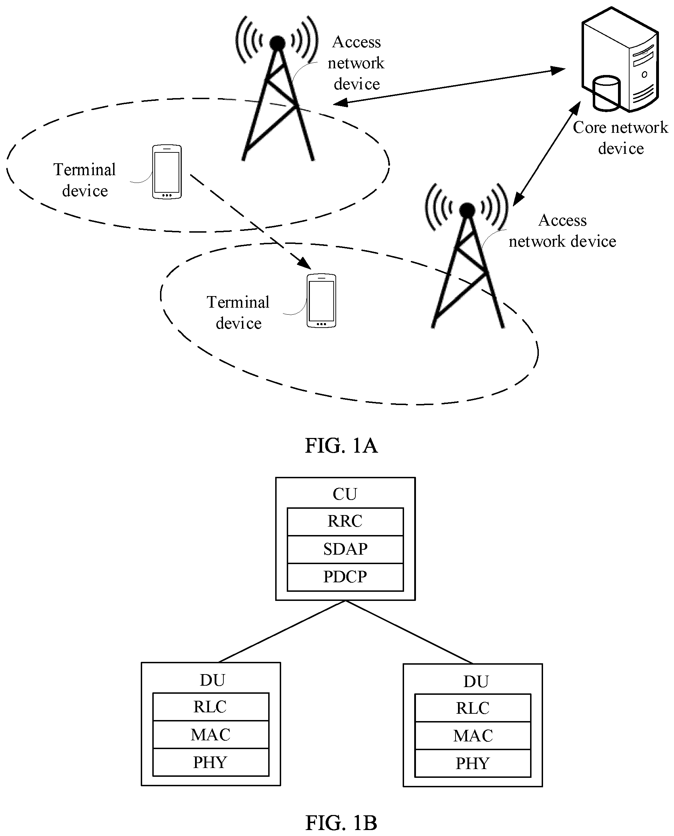

The random access report recording method provided in this application may be applied to a 5G NR (5G New Radio) system, a sixth-generation mobile communication technology (the 6th generation mobile communication technology, 6G) system, and a subsequent evolved standard. This is not limited in this application. As shown in FIG. 1A, the communication system includes at least a terminal device and an access network device.

The terminal device includes a device that provides voice and/or data connectivity for a user. For example, the terminal device may include a handheld device having a wireless connection function, or a processing device connected to a wireless modem. The terminal device may communicate with a core network (for example, a 5G core network (5th generation core, 5GC)) through a radio access network (radio access network, RAN), and may exchange voice and/or data with the RAN. The terminal device may also be referred to as a terminal (Terminal), user equipment (user equipment, UE), a wireless terminal device, a mobile terminal (mobile terminal, MT) device, a subscriber unit (subscriber unit), a subscriber station (subscriber station), a mobile station (mobile station, MS), a mobile console (mobile), a remote station (remote station), an access point (access point, AP), a remote terminal (remote terminal) device, an access terminal (access terminal) device, a user terminal (user terminal) device, a user agent (user agent), a user device (user device), or the like. In addition, the terminal device may be a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. It should be understood that a specific technology and a specific device form used for the terminal device are not limited in embodiments of this application. The terminal device in this application may be any one of the foregoing devices or chips. This is not specifically limited herein. Either being a device or a chip, the terminal device can be manufactured, sold, or used as an independent product. In this embodiment and subsequent embodiments, the terminal device is used as an example for description.

The access network device may be any device that has a wireless transceiver function, and may be configured to be responsible for a function related to an air interface, for example, a radio link maintenance function, a radio resource management function, and some mobility management functions. In addition, the access network device may be configured with a baseband unit (base band unit, BBU), and has a baseband signal processing function. For example, the access network device may be an access network (radio access network, RAN) device that currently serves the terminal device. Currently, some common examples of the access network device are a NodeB (NodeB, NB), an evolved NodeB (evolved NodeB, eNB), a next generation NodeB (next generation NodeB, gNB) in a 5G new radio (new radio, NR) system, a node (for example, an xNodeB) in a 6G system, a transmission reception point (transmission reception point, TRP), a radio network controller (radio network controller, RNC), a base station controller (base station controller, BSC), a base transceiver station (base transceiver station, BTS), and a home base station (for example, a home evolved NodeB (home evolved NodeB) or a home NodeB (home NodeB, HNB)). In addition, in a network structure such as a cloud radio access network (cloud radio access network, CloudRAN) or an open radio access network (open radio access network, ORAN), the access network device may be a device including a central unit (central unit, CU) (which is also referred to as a control unit) and/or a distributed unit (distributed unit, DU). The RAN device including the CU and the DU splits protocol layers of the gNB in the NR system. Functions of some protocol layers are centrally controlled by the CU, and functions of some or all of remaining protocol layers are distributed in the DU. The CU centrally controls the DU. It should be understood that the access network device in embodiments of this application may be any one of the foregoing devices or a chip in the foregoing device. This is not specifically limited herein. Either being a device or a chip, the access network device can be manufactured, sold, or used as an independent product. In this embodiment and subsequent embodiments, the access network device is used as an example for description.

Optionally, when the access network device includes a CU and a DU, a plurality of DUs may share one CU. Division may be performed on the CU and the DU based on a protocol stack. For example, as shown in FIG. 1B, in an implementation, the CU is deployed with a radio resource control (radio Resource Control, RRC) layer, a packet data convergence protocol (packet data convergence protocol, PDCP) layer, and a service data adaptation protocol (service data adaptation protocol, SDAP) layer in a protocol stack; and the DU is deployed with a radio link control (radio link control, RLC) layer, a media access control (media access control, MAC) layer, and a physical layer (physical layer, PHY) in a protocol stack. Therefore, the CU has RRC, PDCP, and SDAP processing capabilities. The DU has RLC, MAC, and PHY processing capabilities. It may be understood that the foregoing function division is merely an example, and constitutes no limitation on the CU and the DU. In other words, there may be another function division manner for the CU and the DU. Details are not described in this application.

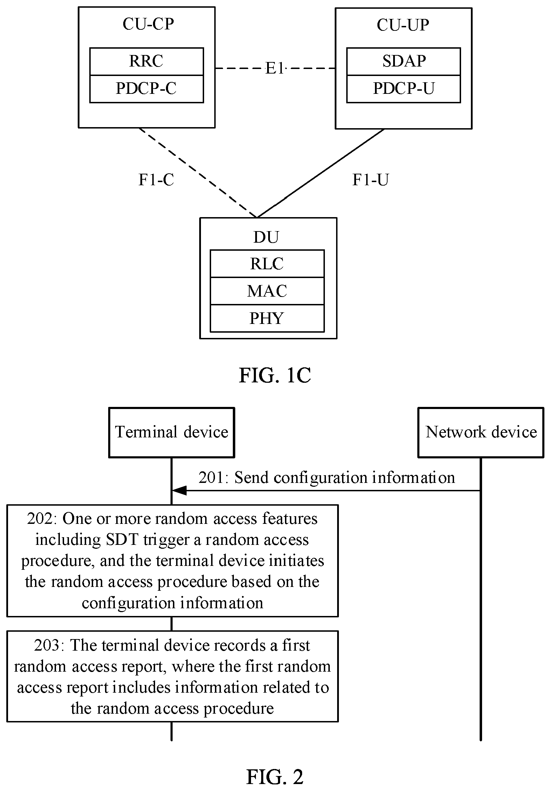

It should be understood that functions of the CU may be implemented by a single entity, or may be implemented by different entities. For example, as shown in FIG. 1C, a control plane (CP) and a user plane (UP) in the function of the CU may be separated, that is, the CU is divided into a CU control plane (CU-CP) and a CU user plane (CU-UP). For example, the CU-CP and the CU-UP may be implemented by different function entities. The CU-CP and the CU-UP may be coupled to the DU to jointly implement functions of a base station. Optionally, the CU-CP may be further divided into a CU-CP 1 and a CU-CP 2. The CU-CP 1 includes various radio resource management functions, and the CU-CP 2 includes only an RRC function and a PDCP-C function (namely, a basic function of control plane signaling at the PDCP layer). In a possible manner, the CU-CP is responsible for a control plane function, mainly including RRC and PDCP-C. The PDCP-C is mainly responsible for data encryption and decryption, integrity protection, data transmission, and the like on a control plane. The CU-UP is responsible for a user plane function, mainly including SDAP and PDCP-U. The SDAP is mainly responsible for processing data of a core network and mapping a data flow (flow) to a bearer. The PDCP-U is mainly responsible for encryption, decryption, integrity protection, header compression, serial number maintenance, data transmission, and the like on a data plane. The CU-CP is connected to the CU-UP through an E1 interface. The CU-CP represents that a gNB is connected to the core network through an NG interface, and is connected to the DU through an F1 interface control plane (that is, F1-C). The CU-UP is connected to the DU through an F1 interface user plane (that is, F1-U). Certainly, in another possible implementation, the PDCP-C is alternatively in the CU-UP. The control plane CU-CP of the CU further includes a further divided architecture, that is, an existing CU-CP is further divided into a CU-CP 1 and a CU-CP 2. The CU-CP 1 includes various radio resource management functions (for example, mobility management and a specific value of each piece of information in a downlink RRC message sent to a terminal device), and the CU-CP 2 includes only an RRC function (for example, responsible for generating a downlink RRC message and decoding an uplink RRC message) and a PDCP-C function (namely, a basic function of control plane signaling at a PDCP layer).

Optionally, the communication system may further include a core network device. The core network device is a device in a core network (core network, CN) that provides service support for the terminal device. Currently, some common examples of the core network device are an access and mobility management function (access and mobility management function, AMF) entity, a session management function (session management function, SMF) entity, and a user plane function (user plane function, UPF) entity. Details are not enumerated herein. The AMF entity may be responsible for access management and mobility management of the terminal device. The SMF entity may be responsible for session management, for example, user session establishment. The UPF entity may be a functional entity on a user plane, and is mainly responsible for connecting to an external network. It should be noted that an entity in this application may also be referred to as a network element or a functional entity. For example, the AMF entity may also be referred to as an AMF network element or an AMF functional entity. For another example, the SMF entity may also be referred to as an SMF network element or an SMF functional entity. It should be noted that the core network device in this application includes at least an AMF entity.

Specifically, the random access report recording method provided in this application may be applied to random access-based SDT (random access-based SDT, RA-SDT), for example, 4-step contention-based random access (4-step CBRA) or 2-step contention-based random access (2-step CBRA).

The following describes a main procedure of the random access report recording method in this application with reference to FIG. 2. In the method, a terminal device supports performing SDT in an inactive state, and a network device and the terminal device mainly perform the following steps.

Step 201: The network device sends configuration information to the terminal device.

Correspondingly, the terminal device receives the configuration information.

For example, the network device sends a system message, and the terminal device receives the system message to obtain the configuration information. For example, the system message may be a system information block 1 (system information block 1, SIB 1). For example, the network device includes the configuration information in the SIB 1, and broadcasts the SIB 1 to a cell in which the terminal device is located, and the terminal device receives the SIB 1 and obtains the configuration information.

The configuration information indicates, to the terminal device, a resource for performing random access. For example, the configuration information includes a set of random access resources for a random access feature, and the random access feature includes at least one of the following: a reduced capability terminal device feature, a small data transmission SDT feature, a coverage enhancement feature, and a network slicing feature. For example, the set of random access resources includes a random access resource for an SDT random access feature (which may also be referred to as an SDT feature random access resource, or an SDT-related random access resource). The network device may indicate, to the terminal device by using the configuration information, a random access resource applicable to one or more random access features.

For the random access resource applicable to the one or more random access features, the random access feature (feature for short) includes one or more of the reduced capability (reduced capability, RedCap) terminal device feature, the small data transmission (small data transmission, SDT) feature, the coverage enhancement (coverage enhancement, CovEnh) feature, and the network slicing (RAN Slicing) feature. Optionally, the foregoing different random access features may form a feature combination. For example, the RedCap feature and the SDT feature may form a feature combination, and may be represented as a feature combination {RedCap+SDT}. For another example, the RedCap feature and the CovEnh feature may form a feature combination, and may be represented as a feature combination {RedCap+CovEnh}. For another example, the three features: the SDT feature, the CovEnh feature, and the RedCap feature, may form a feature combination, and may be represented as a feature combination {SDT+RedCap+CovEnh}. During actual application, there are also examples of a plurality of feature combinations, which are not enumerated herein.

For example, the set of random access resources indicated by the configuration information includes the random access resource for the SDT random access feature. If a random access resource is applicable to only the SDT feature, the random access resource is applicable to only the SDT feature and is not applicable to another random access feature. If a random access resource is applicable to a plurality of random access features including the SDT feature, the random access resource is applicable to a random feature combination and the random feature combination includes the SDT feature. For example, the set of random access resources includes a random access resource indicating the SDT feature and/or a random access resource indicating the RedCap feature and the SDT feature. For another example, the set of random access resources includes a random access resource indicating the CovEnh feature and the SDT feature.

Optionally, the configuration information further includes priority information of at least one random access feature, the priority information of the random access feature is used by the terminal device to determine, based on the priority information of the random access feature, an available random access resource for a random access procedure from the set of random access resources, and the random access resource is applicable to all or some of one or more random access features including at least the SDT feature. For example, the network device configures a random access resource for one or more of the following features: RedCap+SDT, RedCap, RedCap+CovEnh, SDT+CovEnh, and slice group 1+SDT. For example, priority information of a random access feature is RedCap>Slice group 1>SDT>CovEnh. A random access resource including a Redcap indication is first selected, a random access resource including a slice group 1 indication is further selected from the selected resource, a random access resource including an SDT indication is further selected from the selected resource, and a random access resource including a CovEnh indication is further selected from the selected resource.

Optionally, a random access resource applicable to the random access feature and RACH partition includes 2-step RACH partition configuration information and/or 4-step RACH partition configuration information. The 2-step RACH partition configuration information indicates a 2-step-based random access resource, and the 4-step RACH partition configuration information is used to configure a 4-step-based random access resource. Step 202: The one or more random access features including the SDT trigger the random access procedure, and the terminal device initiates the random access procedure based on the configuration information.

In a possible implementation, when the one or more random access features including at least the SDT feature meet a condition for triggering the random access procedure (that is, the random access procedure is triggered), the terminal device selects a random access resource and initiates the random access procedure based on the configuration information.

In this example, when the random access is triggered by a feature combination including the RedCap feature, the SDT feature, and the CovEnh feature, and priority information of the random access feature is RedCap>Slice group 1>SDT>CovEnh, the network device configures a random access resource for one or more of the following features: RedCap+SDT, RedCap, RedCap+CovEnh, SDT+CovEnh, and slice group 1+SDT. Because the combination of random access resources does not include a random access resource corresponding to a feature combination RedCap+SDT+CovEnh, the terminal device needs to select the random access resource from the combination of random access resources based on the priority information of the random access feature. For example, based on priority information RedCap>SDT>CovEnh of the random access feature, the terminal device first selects one or more random access resources applicable to one or more random access features including the RedCap feature, then the terminal device determines one or more random access resources applicable to the SDT feature from the one or more random access resources applicable to the one or more random access features including the RedCap feature, and further the terminal device determines one or more random access resources applicable to the CovEnh feature, and selects, based on the foregoing random access resource selection process, a random access resource indicating the feature combination RedCap+SDT from the set of random access resources configured by the terminal device in the network device.

The terminal device initiates the random access procedure for the RedCap feature and the SDT feature based on the selected random access resource. The random access procedure includes random access-based small data transmission. For example, if the random access resource is applicable to the one or more random access features including at least the SDT feature, the random access procedure includes at least the random access-based small data transmission. For example, if the random access resource selected by the terminal device is applicable to at least one or more random access features, and the one or more random access features do not include the SDT feature, the random access procedure does not include the random access-based small data transmission.

It should be understood that the terminal device meets at least a condition for triggering random access for SDT. The condition for triggering random access for SDT includes the following items:
(1) a data volume to be transmitted is less than a data volume threshold set in an RRC release message (namely, an RRC release message); (2) an RSRP of a downlink path loss reference signal is greater than an RSRP threshold set in the RRC release message; and (3) the RRC release message does not carry a configured grant (configured grant, CG) configuration or a CG resource is invalid.

It should be understood that the random access procedure initiated by the terminal device may be a 2-step-based SDT random access procedure (namely, a 2-step SDT RACH) or may be a 4-step-based SDT random access procedure (namely, a 4-step SDT RACH). Specifically, the terminal device determines, based on content of the configuration information, whether to initiate the 2-step SDT RACH or the 4-step SDT RACH. For example, if only a 4-step SDT RACH-based random access resource is configured on a bandwidth part (bandwidth part, BWP) selected by the terminal device, the terminal device selects a 4-step random access procedure; if only a 2-step SDT RACH-based random access resource is configured, the terminal device selects a 2-step random access procedure; or if both a 4-step SDT RACH-based random access resource and a 2-step SDT RACH-based random access resource are configured, the terminal device determines which random access manner is selected based on a reference signal received power (reference signal received power, RSRP) of the downlink path loss reference signal and a threshold configured on a network side. For example, when the RSRP is greater than the threshold, the terminal device selects the 2-step random access procedure; or when the RSRP is less than the threshold, the terminal device selects the 4-step random access procedure.

It should be noted that the SDT random access procedure initiated by the terminal device may include fallback (fallback) (also referred to as backoff). For example, the terminal device initiates the 2-step SDT RACH. In case of a random access failure, the terminal device falls back to the 4-step SDT RACH. For example, if the terminal device receives indication information that is sent by the network device and that indicates fallback, after receiving the indication information, the terminal device determines to fall back to the 4-step SDT RACH. For another example, if the terminal device determines a 2-step SDT RACH failure (for example, a maximum number of preamble (preamble) transmissions is reached, or a received MsgB fails to be resolved), the terminal device determines to fall back to the 4-step SDT RACH. This is not specifically limited herein.

Step 203: The terminal device records a first random access report, where the first random access report includes information related to the random access procedure.

Specifically, after the terminal device successfully performs the random access procedure, the terminal device records the first random access report related to the SDT-related random access procedure.

In a possible manner, the random access procedure is applicable to a random access-based SDT feature, and the first random access report includes information related to the SDT random access procedure. In a possible manner, the random access procedure is applicable to one or more random access features that do not include the SDT feature, and the first random access report includes the information related to the random access procedure. For example, if the random access resource is applicable to one or more random access features including at least the SDT feature, the random access procedure includes at least the random access-based small data transmission, and further the terminal device records the first random access report, where the first random access report includes information related to the random access-based small data transmission procedure. For example, if the random access resource is applicable to at least one or more random access features, and the one or more random access features do not include the SDT feature, the random access procedure does not include the random access-based small data transmission, and further the terminal device records the first random access report, where the first random access report includes the information related to the random access procedure.

It should be noted that successfully performing the random access procedure by the terminal device may be successfully performing the 2-step RACH by the terminal device, or may be successfully performing the 4-step RACH by the terminal device, or may be failing to perform the 2-step RACH by the terminal device, but falling back and successfully performing the 4-step RACH by the terminal device. This is not specifically limited herein. For example, if the terminal device successfully performs the 2-step RACH, the first random access report includes information related to a 2-step RACH procedure. If the terminal device successfully performs the 4-step RACH, the first random access report includes information related to a 4-step RACH procedure. If the terminal device falls back from the 2-step RACH to the 4-step RACH and successfully performs the 4-step RACH, the first random access report includes information related to a 2-step RACH procedure and a 4-step RACH procedure.

In a possible implementation, the terminal device records the first random access report when a number of historical first random access reports recorded by the terminal device is less than a first threshold. The first threshold is an upper limit of a number of first random access reports recorded by the terminal device, and may also be understood as a maximum number of first random access reports recorded by the terminal device. The historical first random access report is a first random access report that is generated or recorded by the terminal device before a current moment.

For example, each time the terminal device generates a first random access report, the terminal device performs a counting operation to record a number of first random access reports generated by the terminal device. In addition, each time the terminal device successfully performs the SDT random access procedure, the terminal device determines, based on the first threshold, whether to record information related to current SDT random access, to generate a first random access report of the current SDT random access procedure. The terminal device records the first random access report of the current SDT random access procedure only when the number of historical first random access reports recorded by the terminal device is less than the first threshold; or the terminal device does not record the first random access report of the current SDT random access procedure when the number of historical first random access reports recorded by the terminal device is greater than or equal to the first threshold.

In this embodiment, the terminal device may obtain the first threshold in any one of the following implementations.

In a possible implementation, the first threshold is configured by the network device (for example, an access network device). For example, the access network device sends the first threshold to the terminal device, and correspondingly the terminal device receives the first threshold from the access network device. For example, the network device may send the first threshold to the terminal device by using a common RRC message or a dedicated RRC message. The common RRC message may be a system message, for example, a SIB 1, and the dedicated RRC message may be an RRC reconfiguration message.

In another possible implementation, the first threshold is protocol-predefined. For example, a new parameter (for example, maxRAFeatureReport or maxRASDTReport) is protocol-predefined, and the parameter is the upper limit of the number of first random access reports recorded by the terminal device.

In another possible implementation, the first threshold is from a network management device (for example, an operation, administration, and maintenance (operation, administration, and maintenance, OAM) device). For example, the OAM device sends the first threshold to the terminal device.

In this embodiment, the information related to the random access procedure includes one or more of the following: first indication information, the priority information of the at least one random access feature, and second indication information.

The first indication information indicates at least one random access feature triggering the random access procedure, and the at least one random access feature includes the SDT feature. It may also be understood that only the SDT feature triggers the random access procedure, or a combination of random access features including the SDT feature triggers the random access procedure. Optionally, the first indication information may indicate only the SDT feature, or may indicate the combination of random access features including the SDT feature.

Optionally, the priority information of the random access feature includes priority information of the SDT feature. For explanations of the priority information of the random access feature, refer to step 201. Details are not described herein again.

The second indication information indicates a random access feature to which an available random access resource selected by the terminal device from the set of random access resources is applicable (corresponding). The random access resource is applicable to all or some of the one or more random access features including at least the SDT feature, or may be one or more specific random access features to which the random access resource is not applicable. Optionally, all or some of the one or more random access features including at least the SDT feature include the SDT feature, and all or some of the one or more random access features including at least the SDT feature may not include the SDT feature. Optionally, the second indication information may indicate only the SDT feature, or may indicate the combination of random access features including the SDT feature, or may not indicate any random access feature. For example, if the terminal device needs to trigger the SDT random access procedure, a random access resource selected by the terminal device is applicable to the one or more random access features including the SDT feature, and further the second indication information includes at least the SDT feature.

Optionally, the information related to the random access procedure further includes one or more of the following:
random access cell identifier information, for example, a physical cell identifier (physical cell identifier, PCI) of a cell accessed by the terminal device;
random access frequency information, indicating a frequency at which the terminal device performs random access;
time-frequency domain configuration information, indicating a time-frequency resource for performing random access, where the time-frequency domain configuration information is used to determine a time-frequency resource for sending a random access preamble, and optionally the time-frequency domain configuration information further includes information such as a subcarrier spacing;
signal quality measurement information, indicating quality of a signal measured by the terminal device, where for example, the signal quality measurement information includes an RSRP value and the like of the signal measured by the terminal device;
indication information indicating that the signal quality measurement information meets a quality threshold, where the indication information indicates whether a measured RSRP value reaches the quality threshold;
beam information for performing a random access attempt, for example, a beam number, a number of preambles (preamble) sent on a beam, and a collision detection indication; and
a data volume to be transmitted during 2-step random access, and physical uplink shared channel (physical uplink shared channel, PUSCH) configuration information of the 2-step random access.

Specifically, the terminal device may generate a first random access report based on the information related to the random access procedure in any one of the following implementations. The first random access report is related to SDT.

In a possible implementation, at least one random access feature including the SDT triggers the random access procedure, and the random access procedure initiated by the terminal device is applicable to the SDT, that is, the current random access procedure is the SDT random access procedure. The terminal device records the first random access report.

In another possible implementation, at least one random access feature including the SDT triggers the random access procedure, and the random access procedure initiated by the terminal device is not applicable to the SDT, that is, the current random access procedure is a random access procedure of at least one random access feature that does not include the SDT. The terminal device records the first random access report.

In a possible implementation, the first random access report is a random access report added by the terminal device. A type of an information element carried in the first random access report is not completely the same as a type of an information element carried in a random access report in the conventional technology. In addition to the information element carried in the random access report in the conventional technology, the first random access report includes an information element related to the SDT feature. For example, when the first random access report carries the information element in the random access report in the conventional technology, it is considered that some information elements are simplified, and information elements of a random access purpose (raPurpose) are simplified. For another example, compared with the random access report in the conventional technology, the first random access report includes an indication related to the SDT feature.

In another possible implementation, the terminal device adds, based on a random access report in the conventional technology, a random access report determined by an information element related to the SDT feature as a first random access report. In addition to the information element in the random access report in the conventional technology, the first random access report includes the information element related to the SDT feature.

Specifically, the first random access report adding and configuring the following information element in a conventional random access report may also be understood as the terminal device configuring the following information element in the conventional random access report to indicate whether a current random access procedure is triggered and used for the SDT.

In a possible example, a random access feature indicated by random access feature information that indicates to trigger the current random access procedure and that is in a random access purpose (raPurpose) information element includes at least the SDT feature, where the current random access procedure may be triggered by only the SDT, or may be triggered by the combination of random access features including the SDT. For example, after receiving a random access report, the network device can determine, based on SDT information indicated by a random access destination information element, that the received random access report is a first random access report, where the first random access report is related to the SDT.

In another possible example, whether the random access report is a first random access report may be indicated based on whether the following condition is met, or it may be understood that whether the current random access procedure is triggered for the SDT is indicated based on whether the following condition is met. The condition is that the RSRP meets a random access-based SDT-related threshold, and the data volume to be transmitted meets random access-based SDT-related threshold. For example, when an RSRP in a random access report 1 is greater than the random access-based SDT-related threshold and is less than or equal to a configuration grant-based SDT-related threshold, and a data volume to be transmitted in the random access report 1 is less than the random access-based SDT-related threshold, the random access report 1 is a first random access report. When an RSRP in a random access report 1 does not meet the random access-based SDT-related threshold, or a data volume to be transmitted in a random access report 1 does not meet the random access-based SDT-related threshold, the random access report 1 is not SDT-related, and the random access report 1 is not a first random access report. For example, after receiving a random access report, the network device can determine, based on the RSRP value in the random access report 1, the data volume to be transmitted in the random access report 1, and the foregoing condition, whether the received random access report is SDT-related, to determine whether the received random access report is a first random access report.

In another possible example, the priority information of the random access feature is indicated in the first random access report.

In addition, it should be noted that a value of the information related to the random access procedure is determined based on a measurement value of the random access procedure and a parameter value used in the random access procedure. The parameter value used in the random access procedure includes a random access resource specific parameter corresponding to the random access feature (namely, a parameter specific to the random access procedure related to the random access feature), a legacy RACH parameter (namely, a basic RACH parameter in the conventional technology), and a common parameter (namely, a Per RACH configuration parameter) for the random access resource specific parameter and the legacy RACH parameter.

Optionally, the parameter specific to the random access procedure of the random access feature includes the time-frequency domain configuration information and the PUSCH configuration information that are described above. In addition, the parameter specific to the random access procedure of the random access feature includes a to-be-transmitted data volume threshold parameter and an SSB selection-related threshold parameter (for example, a 4-step RSRP quality threshold (namely, rsrp-ThresholdSSB) and a 2-step RSRP quality threshold (namely, msgA-RSRP-ThresholdSSB)).

Optionally, the Per RACH configuration parameter includes a threshold of a maximum number of msgA transmissions, a threshold of a maximum number of RACH transmissions, and the like.

Specifically, the terminal device determines, based on random access resource information (for example, an additional RACH-ConfigCommon information element) for a random access feature in the configuration information, a value of the parameter specific to the random access procedure related to the random access feature in the first random access report. When the parameter value of the specific parameter is missed in the random access resource information for the random access feature in the configuration information, the terminal device determines the value of the parameter specific to the random access procedure based on a 4-step random access common configuration information element (RACH-ConfigCommon (4-step)) and/or a 2-step random access common configuration information element (msgA-ConfigCommon (2-step)).

In this embodiment, after the random access procedure is triggered for the SDT, the terminal device can record the SDT-related first random access report. Further, the network side optimizes, based on the first random access report, a random access configuration of the random access feature. The random access configuration may be a random access resource applicable to at least the SDT feature, or may be a priority of a random access feature including the SDT feature, so as to improve a success rate of the SDT random access procedure of the terminal device.

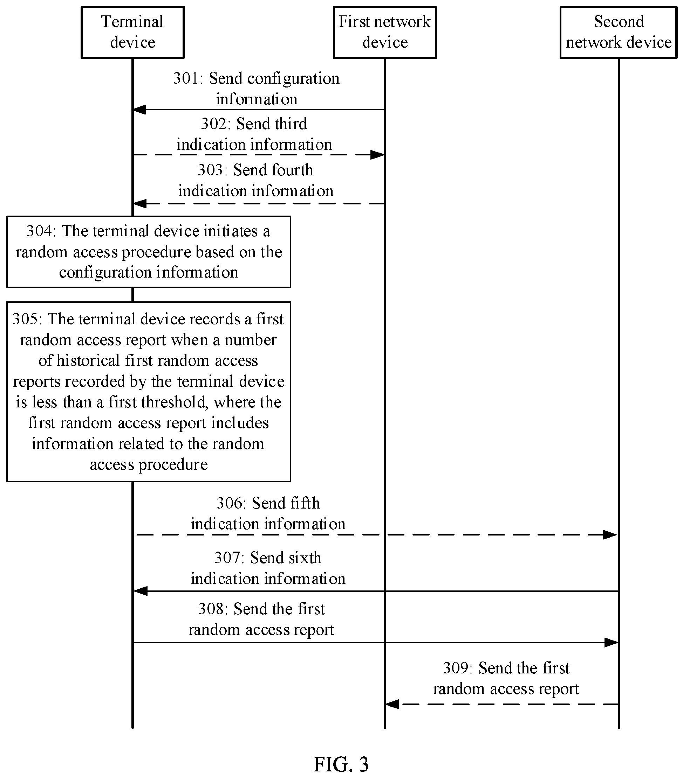

The following further describes the random access report recording method in this application with reference to FIG. 3. In the method, a terminal device supports performing SDT in an inactive state, and the terminal device may involve signaling exchange with a plurality of network devices. For ease of description, an example in which the plurality of network devices include a first network device and a second network device is used. The first network device, the second network device, and the terminal device mainly perform the following steps.

Step 301: The first network device sends configuration information to the terminal device.

Correspondingly, the terminal device receives the configuration information.

For example, the first network device broadcasts the configuration information, and the terminal device receives the configuration information from the first network device.

For explanations of the configuration information, refer to related descriptions in step 201. Details are not described herein.

Step 302: The terminal device sends third indication information to the network device.

Correspondingly, the network device receives the third indication information from the terminal device.

Step 302 is an optional step.

The third indication information indicates whether the terminal device supports recording of an SDT-related random access report, or indicates that the terminal device supports recording of an SDT-related random access report.

Optionally, the third indication information may be carried in capability information of the terminal device. For example, the third indication information is a newly-added capability bit in radio capability information (UE Radio Capability information) of the terminal device. For example, if a value of the capability bit is "0", it indicates that the terminal device does not support recording of the SDT-related random access report; or if a value of the capability bit is "1", it indicates that the terminal device supports recording of the SDT-related random access report. In this embodiment, an example in which the third indication information indicates that the terminal device supports recording of the SDT-related random access report is used for description.

For example, the terminal device may send, to the first network device during initial attach (attach) or tracking area update (tracking area update, TAU), the UE radio capability information that carries the third indication information. Correspondingly, the first network device can obtain the third indication information based on the received UE radio capability information, and then determine, based on the third indication information, that the terminal device supports recording of the SDT-related random access report.

For example, the first network device may send a UE capability enquiry (UE Capability Enquiry) message to the terminal device in a connected state. Correspondingly, the terminal device sends the third indication information to the first network device.

The terminal device can send the third indication information to the first network device, so that the first network device determines, based on the third indication information, that the terminal device supports recording of the SDT-related random access report. This helps the first network device determine whether to indicate the terminal device to record the SDT-related random access report.

Step 303: The first network device sends fourth indication information to the terminal device, and correspondingly the terminal device receives the fourth indication information from the first network device.

Step 303 is an optional step.

The fourth indication information indicates whether the terminal device records the SDT-related random access report, or indicates that the terminal device records the SDT-related random access report. In a possible example, the fourth indication information indicates the terminal device to record the SDT-related random access report. In another possible example, the fourth indication information indicates the terminal device not to record the SDT-related random access report.

For example, the first network device may send the fourth indication information to the terminal device by using a common RRC message or a dedicated RRC message. The common RRC message may be a system message, for example, a SIB 1, and the dedicated RRC message may be an RRC reconfiguration message.

The fourth indication information includes a first threshold, and the first threshold is an upper limit of a number of first random access reports recorded by the terminal device, and may also be understood as a maximum number of first random access reports recorded by the terminal device. For explanations of the first threshold, refer to related descriptions in step 203. Details are not described herein again.

It should be noted that when the fourth indication information includes the first threshold, a value of the first threshold may indicate whether the terminal device records the SDT-related random access report. For example, when the value of the first threshold is 0, it indicates that the terminal device is indicated not to record the SDT-related random access report; or when the value of the first threshold is an integer greater than 0, it indicates that the terminal device is indicated to record the SDT-related random access report, where the integer greater than 0 is the upper limit of the number of first random access reports recorded by the terminal device.

Optionally, if the first network device includes a CU and a DU, the CU of the first network device is an architecture in which a CU control plane (CU-CP) is separated from a CU user plane (CU-UP). In addition, the CU-CP may be further divided into a CU-CP 1 and a CU-CP 2, and the CU-CP 1 determines the fourth indication information and/or the first threshold. Then, the CU-CP 1 sends the fourth indication information and/or the first threshold to the CU-CP 2. The CU-CP 2 sends the fourth indication information and/or the first threshold to the terminal device by using the DU. For example, the DU may send the fourth indication information to the terminal device by using a common RRC message or a dedicated RRC message.

Because the terminal device can record the SDT-related random access report or does not record the SDT-related random access report based on the received fourth indication information and an indication of the first network device, this helps the first network device flexibly control whether the terminal device enables a function of recording the SDT-related random access report. Further, because the terminal device can obtain the upper limit (namely, the first threshold) of the number of recorded first random access reports, recording of a first random access report is triggered only when the number of recorded historical first random access reports is less than the first threshold. This helps control a number of first random access reports stored in the terminal device.

Step 304: The terminal device initiates a random access procedure based on the configuration information.

Optionally, the random access procedure is random access-based small data transmission. For example, if the random access procedure is triggered by at least one random access feature including SDT, and a random access resource selected by the terminal based on the configuration information is applicable to one or more random access features including at least an SDT feature, the random access procedure includes at least the random access-based small data transmission. For example, if a random access resource is applicable to at least one or more random access features, and the one or more random access features do not include an SDT feature, the random access procedure does not include the random access-based small data transmission.

Step 304 is similar to step 202 in the embodiment corresponding to FIG. 2. For details, refer to related descriptions in step 202. Details are not described herein again.

Step 305: The terminal device records a first random access report when the number of historical first random access reports recorded by the terminal device is less than the first threshold, where the first random access report includes information related to the random access procedure.

The first random access report is an SDT-related random access report. For explanations of the first random access report, refer to related descriptions in step 203. Details are not described herein again.

After the terminal device successfully performs an SDT-related random access procedure, the terminal device determines, based on the first threshold, whether to record current SDT-related random access procedure information, to generate the first random access report. The terminal device records the current SDT-related first random access report only when the number of historical first random access reports recorded by the terminal device is less than the first threshold; or the terminal device no longer records the SDT-related first random access report when the number of historical first random access reports recorded by the terminal device is greater than or equal to the first threshold.

It should be noted that if the first network device and the terminal device perform step 303, the first threshold in this step may be from the fourth indication information. If the first network device and the terminal device do not perform step 303, the first threshold in this step may be protocol-predefined, or may be from a network management device (for example, an OAM device). For details, refer to descriptions of the first threshold in step 203. Details are not described herein again.

Step 306: The terminal device sends fifth indication information to the second network device.

Correspondingly, the second network device receives the fifth indication information from the terminal device.

Step 306 is an optional step.

The second network device may be the first network device, or may be another network device different from the first network device. The fifth indication information indicates availability of the first random access report. It may also be understood that the fifth indication information indicates that the terminal device stores the first random access report. After the second network device receives the fifth indication information, the second network device may retrieve a random access report, that is, the second network device indicates the terminal device to report the random access report. Specifically, refer to the following step 307.

Optionally, the fifth indication information further includes type information of the random access report. For example, the fifth indication information can indicate whether a random access report stored by the terminal device is a legacy random access report (for example, a legacy RACH report) or a random access report related to one or more random access features (for example, a random access report including an SDT feature). The one or more random access features may be one or more random access features triggering random access, or may be one or more random access features for initiating (using) a random procedure.

For example, the terminal device may provide the fifth indication information in an RRC message. The RRC message may be any one or more of an RRC establishment complete message, an RRC reconfiguration complete message, an RRC reestablishment complete message, and an RRC resume complete message.

It should be noted that when the terminal device does not perform step 306, the second network device may also obtain the fifth indication information. In a possible implementation, the second network device includes a CU and a DU. The DU can determine the fifth indication information after a random access procedure is completed, and can send the fifth indication information to the CU through an F1 interface. For example, in a CU-DU architecture, after the DU observes that an RACH event is completed, the DU can indicate availability of an RACH report and a type of the random access report, namely, the fifth indication information, to the CU through the F1 interface. Further, the CU receives, through the F1 interface, the fifth indication information sent by the DU.

The terminal device can send the fifth indication information to the second network device to indicate whether the terminal device has an available first random access report. This helps the second network device determine, after receiving the fifth indication information, whether to obtain the first random access report from the terminal device, and helps a network side obtain the first random access report from the terminal device in a timely manner.

When the second network device determines that the terminal device stores a random access report (for example, the first random access report) required by the second network device, the second network device sequentially performs step 307 and step 308.

Step 307: The second network device sends sixth indication information to the terminal device.

Correspondingly, the terminal device receives the sixth indication information from the second network device.

The sixth indication information indicates the terminal device to report the first random access report.

After the terminal device receives the sixth indication information, the terminal device sends the first random access report to the second network device.

Step 308: The terminal device sends the first random access report to the second network device.

Correspondingly, the second network device receives the first random access report from the terminal device.

Step 309: The second network device forwards the first random access report to the first network device.

Correspondingly, the first network device receives the first random access report from the second network device.

Step 309 is an optional step.

Specifically, when the second network device and the first network device are different network devices, the second network device may send some or all of information about the foregoing report (namely, the first random access report) to the first network device. Optionally, the second network device may further send type information of the report to the first network device. A type of the report may be 5G (for example, NR or gNB), 4G (for example, eLTE or ng-eNB) connected to a 5G core network, 4G (for example, LTE or eNB), or another system or standard.

For example, if there is an interface for direct communication between the second network device and the first network device, the second network device sends some or all of the information of the report to the first network device through an interface (for example, an X2 interface or an Xn interface) between base stations. For example, the second network device may send some or all of the information about the first random access report to the first network device by using a failure indication (FAILURE INDICATION, RLF INDICATION) message, a handover report (HANDOVER REPORT) message, an access and mobility indication (ACCESS AND MOBILITY INDICATION) message, or another message.

For example, if the second network device and the first network device cannot directly communicate with each other, the second network device may send some or all of the information about the first random access report to the first network device by using a core network device. For example, the second network device sends some or all of the information about the first random access report to the core network device through an interface (for example, an S1 interface or an NG interface) between the base station and the core network device, and the core network device forwards, to the first network device, the information received from the second network device. For example, the second network device may send some or all of the information about the first random access report to the first network device by using at least one of the following messages on the S1 interface or the NG interface: an uplink RAN configuration transfer (UPLINK RAN CONFIGURATION TRANSFER) message, a downlink RAN configuration transfer (DOWNLINK RAN CONFIGURATION TRANSFER) message, an eNB configuration transfer (eNB CONFIGURATION TRANSFER) message, a core network device configuration transfer (MME CONFIGURATION TRANSFER) message, or another message.

In this embodiment, because the at least one or more random access features including SDT triggers the random access procedure, the terminal device can obtain, based on the configuration information of the first network device, a random access resource that is configured by the first network device for the terminal device and that is applicable to the random access feature, to initiate the random access procedure. In addition, when receiving the fourth indication information that is delivered by the first network device and that indicates to record of the SDT-related random access report, the terminal device can record the first random access report corresponding to the SDT-related random access procedure. Therefore, a mechanism of recording the first random access report of the SDT-related random access procedure is proposed, and helps the terminal device feed back the first random access report to the network side, so that the network side optimizes, based on the first random access report, a random access configuration corresponding to the one or more random access features including SDT, where the random access configuration may be a random access resource configuration, or may be a random access feature priority configuration. In this way, the random access procedure can be successfully initiated by using the at least one random access feature including SDT that triggers the random access procedure, to improve a success rate of an SDT random access procedure of the terminal device.

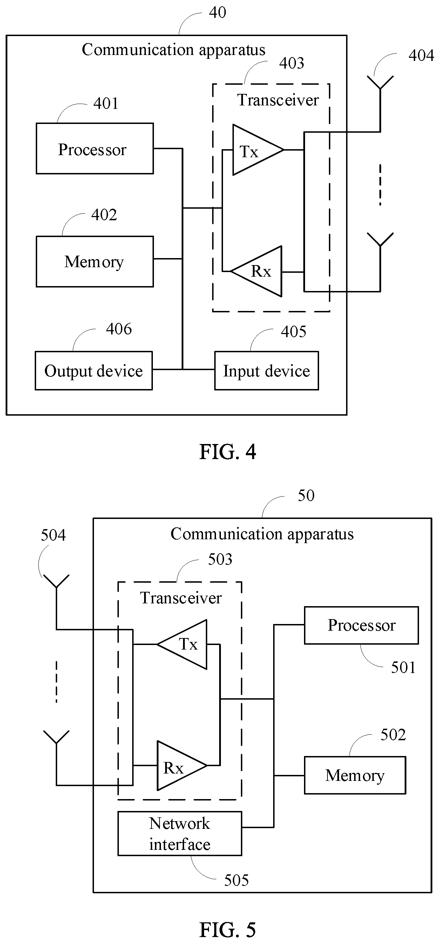

FIG. 4 is a diagram of a structure of a communication apparatus 40 according to an embodiment. It should be understood that the terminal device in the method embodiment corresponding to FIG. 2 or FIG. 3 may be based on a structure of the communication apparatus 40 shown in FIG. 4 in this embodiment.

The communication apparatus 40 includes at least one processor 401, at least one memory 402, and at least one transceiver 403. The processor 401, the memory 402, and the transceiver 403 are connected to each other. Optionally, the communication apparatus 40 may further include an input device 405, an output device 406, and one or more antennas 404. The antenna 404 is connected to the transceiver 403, and the input device 405 and the output device 406 are connected to the processor 401.

In this embodiment, the memory 402 is mainly configured to store a software program and data. The memory 402 may exist independently, and is connected to the processor 401. Optionally, the memory 402 may be integrated with the processor 401, for example, integrated into one or more chips. The memory 402 can store program code for performing the technical solutions in embodiments of this application, and the processor 401 controls execution of the program code. Various types of executed computer program code may also be considered as drivers of the processor 401. It should be understood that FIG. 4 in this embodiment shows only one memory and one processor. However, during actual application, the communication apparatus 40 may include a plurality of processors or a plurality of memories. This is not specifically limited herein. In addition, the memory 402 may also be referred to as a storage medium, a storage device, or the like. The memory 402 may be a storage element (namely, an on-chip storage element) located on the same chip as the processor, or an independent storage element. This is not limited in embodiments of this application.

In this embodiment, the transceiver 403 may be configured to support receiving or sending of a radio frequency signal between the communication apparatus 40 and an access network device, and the transceiver 403 may be connected to the antenna 404. The transceiver 403 includes a transmitter Tx and a receiver Rx. Specifically, the one or more antennas 404 may receive a radio frequency signal. The receiver Rx in the transceiver 403 is configured to: receive the radio frequency signal from the antenna 404, convert the radio frequency signal into a digital baseband signal or a digital intermediate-frequency signal, and provide the digital baseband signal or the digital intermediate-frequency signal for the processor 401, to enable the processor 401 to perform further processing, for example, demodulation processing and decoding processing, on the digital baseband signal or the digital intermediate-frequency signal. In addition, the transmitter Tx in the transceiver 403 is further configured to: receive a modulated digital baseband signal or a modulated digital intermediate-frequency signal from the processor 401, convert the modulated digital baseband signal or the modulated digital intermediate-frequency signal into a radio frequency signal, and transmit the radio frequency signal through the one or more antennas 404. Specifically, the receiver Rx may selectively perform one or more levels of down-mixing processing and analog-to-digital conversion processing on the radio frequency signal to obtain the digital baseband signal or the digital intermediate-frequency signal. A sequence of the down-mixing and the analog-to-digital conversion processing is adjustable. The transmitter Tx may selectively perform one or more levels of up-mixing processing and digital-to-analog conversion processing on the modulated digital baseband signal or the modulated digital medium-frequency signal to obtain the radio frequency signal. A sequence of the up-mixing processing and the digital-to-analog conversion processing is adjustable. The digital baseband signal and the digital medium-frequency signal may be collectively referred to as a digital signal.

It should be understood that the transceiver 403 may also be referred to as a transceiver unit, a transceiver machine, a transceiver apparatus, or the like. Optionally, a component that is configured to implement a receiving function and that is in the transceiver unit may be considered as a receiving unit, and a component that is configured to implement a sending function and that is in the transceiver unit may be considered as a sending unit. That is, the transceiver unit includes the receiving unit and the sending unit. The receiving unit may also be referred to as a receiver, an input port, a receiving circuit, or the like. The sending unit may be referred to as a transmitter, a transmitter machine, a transmitting circuit, or the like.

The processor 401 may be a baseband processor, or may be a central processing unit (central processing unit, CPU). The baseband processor and the CPU may be integrated together or separated from each other. The processor 401 may be configured to implement various functions for the terminal device, for example, configured to process a communication protocol and communication data; or configured to: control the whole terminal device, execute a software program, and process data of the software program; or configured to assist in completing a computing processing task, for example, graphics and image processing or audio processing. Alternatively, the processor 401 is configured to implement one or more of the foregoing functions.

In addition, the output device 406 communicates with the processor 401, and may display information in a plurality of manners. This is not specifically limited herein.

In a design, the communication apparatus 40 is configured to perform the method of the terminal device in the embodiment corresponding to FIG. 2 or FIG. 3. The transceiver 403 in the communication apparatus 40 is configured to receive configuration information from a network device, where the configuration information includes a set of random access resources for a random access feature, and the set of random access resources includes a random access resource for a small data transmission SDT random access feature. The processor 401 is configured to: initiate a random access procedure based on the configuration information when one or more random access features including at least the SDT meet a condition for triggering random access; and record a first random access report, where the first random access report includes information related to the random access procedure. Optionally, the random access procedure includes at least random access-based small data transmission. Optionally, the random access feature includes at least one of the following: a reduced capability terminal device feature, a small data transmission SDT feature, a coverage enhancement feature, and a network slicing feature.

Optionally, the information related to the random access procedure in the first random access report includes one or more of the following:
first indication information, where the first indication information indicates at least one random access feature triggering the random access procedure, and the at least one random access feature includes the SDT feature;
priority information of the random access feature; and
second indication information, where the second indication information indicates a random access feature to which the random access resource determined by the terminal device is applicable (corresponding). Optionally, the random access resource is applicable to all or some of the one or more random access features including at least the SDT feature.

In a possible implementation, the processor 401 is further configured to determine a random access resource for the random access procedure based on the set of random access resources and the priority information of the random access feature, where the random access resource is applicable to the one or more random access features including at least the SDT.

In a possible implementation, the transceiver 403 is further configured to send third indication information to the network device, where the third indication information indicates whether the terminal device supports recording of an SDT-related random access report.

In a possible implementation, the transceiver 403 is further configured to receive fourth indication information from the network device, where the fourth indication information indicates whether the terminal device records the SDT-related random access report.

In a possible implementation, the fourth indication information includes a first threshold, and the first threshold is an upper limit of a number of first random access reports recorded by the terminal device. The processor 401 is specifically configured to record the first random access report when a number of recorded historical first random access reports is less than the first threshold.

In a possible implementation, the transceiver 403 is further configured to send fifth indication information to the network device, where the fifth indication information indicates availability of the first random access report.

In a possible implementation, the transceiver 403 is further configured to: receive sixth indication information from the network device, where the sixth indication information indicates the terminal device to report the first random access report; and send the first random access report to the network device.

It should be noted that for a specific implementation and beneficial effects of this embodiment, refer to the method of the terminal device in the foregoing embodiment. Details are not described herein again.

FIG. 5 is a diagram of a structure of another communication apparatus 50 according to an embodiment. It should be understood that the network device in the method embodiment corresponding to FIG. 2, or FIG. 3 may be based on the structure of the communication apparatus 50 shown in FIG. 5 in this embodiment.

The communication apparatus 50 includes at least one processor 501, at least one memory 502, at least one transceiver 503, at least one network interface 505, and one or more antennas 504. The processor 501, the memory 502, the transceiver 503, and the network interface 505 are connected by using a connection apparatus, and the antenna 504 is connected to the transceiver 503. The connection apparatus may include various types of interfaces, transmission cables, buses, or the like. This is not limited in this embodiment.

The memory 502 is mainly configured to store a software program and data. The memory 502 may exist independently, and is connected to the processor 501. Optionally, the memory 502 may be integrated with the processor 501, for example, integrated into one or more chips. The memory 502 can store program code for performing the technical solutions in embodiments of this application, and the processor 501 controls execution of the program code. Various types of executed computer program code may also be considered as drivers of the processor 501. It should be understood that FIG. 5 in this embodiment shows only one memory and one processor. However, during actual application, the communication apparatus 50 may include a plurality of processors or a plurality of memories. This is not specifically limited herein. In addition, the memory 502 may also be referred to as a storage medium, a storage device, or the like. The memory 502 may be a storage element (namely, an on-chip storage element) located on the same chip as the processor, or an independent storage element. This is not limited in embodiments of this application.

In this embodiment, the transceiver 503 may be configured to support receiving or sending of a radio frequency signal between the communication apparatus 50 and a terminal device, and the transceiver 503 may be connected to the antenna 504. The transceiver 503 includes a transmitter Tx and a receiver Rx. Specifically, the one or more antennas 504 may receive a radio frequency signal. The receiver Rx in the transceiver 503 is configured to: receive the radio frequency signal from the antenna 504, convert the radio frequency signal into a digital baseband signal or a digital intermediate-frequency signal, and provide the digital baseband signal or the digital intermediate-frequency signal for the processor 501, to enable the processor 501 to perform further processing, for example, demodulation processing and decoding processing, on the digital baseband signal or the digital intermediate-frequency signal. In addition, the transmitter Tx in the transceiver 503 is further configured to: receive a modulated digital baseband signal or a modulated digital intermediate-frequency signal from the processor 501, convert the modulated digital baseband signal or the modulated digital intermediate-frequency signal into a radio frequency signal, and transmit the radio frequency signal through the one or more antennas 504. Specifically, the receiver Rx may selectively perform one or more levels of down-mixing processing and analog-to-digital conversion processing on the radio frequency signal to obtain the digital baseband signal or the digital intermediate-frequency signal. A sequence of the down-mixing and the analog-to-digital conversion processing is adjustable. The transmitter Tx may selectively perform one or more levels of up-mixing processing and digital-to-analog conversion processing on the modulated digital baseband signal or the modulated digital medium-frequency signal to obtain the radio frequency signal. A sequence of the up-mixing processing and the digital-to-analog conversion processing is adjustable. The digital baseband signal and the digital medium-frequency signal may be collectively referred to as a digital signal.

It should be understood that the transceiver 503 may also be referred to as a transceiver unit, a transceiver machine, a transceiver apparatus, or the like. Optionally, a component that is configured to implement a receiving function and that is in the transceiver unit may be considered as a receiving unit, and a component that is configured to implement a sending function and that is in the transceiver unit may be considered as a sending unit. That is, the transceiver unit includes the receiving unit and the sending unit. The receiving unit may also be referred to as a receiver, an input port, a receiving circuit, or the like. The sending unit may be referred to as a transmitter, a transmitter machine, a transmitting circuit, or the like.

In addition, the processor 501 is mainly configured to: process a communication protocol and communication data, control the whole network device, execute a software program, and process data of the software program, for example, configured to support the communication apparatus 50 in performing an action described in the foregoing embodiment. The communication apparatus 50 may include a baseband processor and a central processing unit. The baseband processor is mainly configured to process a communication protocol and communication data. The central processing unit is mainly configured to control the whole communication apparatus 50, execute a software program, and process data of the software program. Functions of the baseband processor and the central processing unit may be integrated into the processor 501 in FIG. 5. A person skilled in the art may understand that the baseband processor and the central processing unit may alternatively be processors independent of each other, and are interconnected by using a technology such as a bus. A person skilled in the art may understand that the communication apparatus 50 may include a plurality of baseband processors to adapt to different network standards, the communication apparatus 50 may include a plurality of central processing units to enhance a processing capability of the communication apparatus 50, and components in the communication apparatus 50 may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

In addition, the network interface 505 is configured to enable the communication apparatus 50 to connect to another communication apparatus through a communication link. Specifically, the network interface 505 may include a network interface between the communication apparatus 50 and a core network element, for example, an S1 interface. Alternatively, the network interface 505 may include a network interface between the communication apparatus 50 and another network device (for example, another access network device or another core network element), for example, an X2 interface or an Xn interface.

In a design, the communication apparatus 50 is configured to perform the method of the network device in the embodiment corresponding to FIG. 2 or FIG. 3. The processor 501 in the communication apparatus 50 is configured to determine configuration information, where the configuration information includes a set of random access resources for a random access feature, the set of random access resources includes a random access resource for a small data transmission SDT random access feature, the configuration information is used by the terminal device to initiate random access-based small data transmission and record a first random access report, and the first random access report includes information related to a random access procedure. The transceiver 503 is configured to send the configuration information to the terminal device. Optionally, the random access feature includes at least one of the following: a reduced capability terminal device feature, a small data transmission SDT feature, a coverage enhancement feature, and a network slicing feature.

In a possible implementation, the configuration information further includes priority information of the random access feature, the priority information of the random access feature is used to determine a random access resource for the random access procedure based on the set of random access resources, and the random access resource is applicable to one or more random access features including at least SDT.

The information related to the random access procedure includes one or more of the following:
first indication information, where the first indication information indicates at least one random access feature triggering the random access procedure, and the at least one random access feature includes the SDT feature;
the priority information of the random access feature; and
second indication information, where the second indication information indicates a random access feature to which the random access resource determined by the terminal device is applicable (corresponding). Optionally, the random access resource is applicable to all or some of the one or more random access features including at least the SDT feature.

In a possible implementation, the transceiver 503 is further configured to receive third indication information from the terminal device, where the third indication information indicates whether the terminal device supports recording of an SDT-related random access report.

In a possible implementation, the transceiver 503 is further configured to send fourth indication information to the terminal device, where the fourth indication information indicates whether the terminal device records the SDT-related random access report.

Optionally, the fourth indication information includes a first threshold, and the first threshold is an upper limit of a number of first random access reports recorded by the terminal device.

In a possible implementation, the transceiver 503 is further configured to receive fifth indication information from the terminal device, where the fifth indication information indicates availability of the first random access report.

In a possible implementation, the transceiver 503 is further configured to: send sixth indication information to the terminal device, where the sixth indication information indicates the terminal device to report the first random access report; and receive the first random access report from the terminal device.

It should be noted that for a specific implementation and beneficial effects of this embodiment, refer to the method of the network device in the foregoing embodiment. Details are not described herein again.

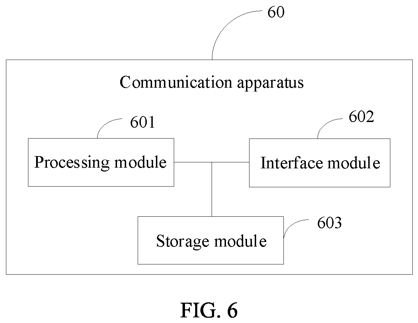

As shown in FIG. 6, this application further provides a communication apparatus 60. The communication apparatus 60 may be a terminal device or an access network device, or may be a component (for example, an integrated circuit or a chip) in a terminal device or an access network device. The communication apparatus 60 may alternatively be another communication module configured to implement the method in the method embodiment of this application.

The communication apparatus 60 may include a processing module 601 (or referred to as a processing unit). Optionally, the communication apparatus 60 may further include an interface module 602 (or referred to as a transceiver unit or a transceiver module) and a storage module 603 (or referred to as a storage unit). The interface module 602 is configured to implement communication with another device. The interface module 602 may be, for example, a transceiver module or an input/output module.

In a possible design, one or more modules in FIG. 6 may be implemented by one or more processors, or may be implemented by one or more processors and memories, or may be implemented by one or more processors and transceivers, or may be implemented by one or more processors, memories, and transceivers. This is not limited in embodiments of this application. The processor, the memory, and the transceiver may be disposed separately or may be integrated.

The communication apparatus 60 has functions of implementing the terminal device described in embodiments of this application. For example, the communication apparatus 60 includes a module, a unit, or a means (means) corresponding to a terminal device performing the steps related to the terminal device described in embodiments of this application. The function, the unit, or the means (means) may be implemented by software or hardware, or may be implemented by hardware executing corresponding software, or may be implemented by a combination of software and hardware. For details, refer to corresponding descriptions in the foregoing corresponding method embodiment.

Alternatively, the communication apparatus 60 has functions of implementing the access network device described in embodiments of this application. For example, the communication apparatus 60 includes a module, a unit, or a means (means) corresponding to an access network device performing the steps related to the access network device described in embodiments of this application. The function, the unit, or the means (means) may be implemented by software or hardware, or may be implemented by hardware executing corresponding software, or may be implemented by a combination of software and hardware. For details, refer to corresponding descriptions in the foregoing corresponding method embodiment.

In a possible design, the modules in the communication apparatus 60 in this embodiment of this application may be configured to perform the method of the terminal device in the embodiment corresponding to FIG. 2 or FIG. 3 in embodiments of this application. For example, the interface module 602 in the communication apparatus 60 is configured to receive configuration information from a network device, where the configuration information includes a set of random access resources for a random access feature, and the set of random access resources includes a random access resource for a small data transmission SDT random access feature. The processing module 601 is configured to: initiate a random access procedure based on the configuration information when one or more random access features including at least SDT meet a condition for triggering random access; and record a first random access report, where the first random access report includes information related to the random access procedure. Optionally, the random access feature includes at least one of the following: a reduced capability terminal device feature, a small data transmission SDT feature, a coverage enhancement feature, and a network slicing feature.

It should be noted that for another implementation of this embodiment, refer to the communication apparatus 40 in the embodiment corresponding to FIG. 4. Details are not described herein again.

In another possible design, the modules in the communication apparatus 60 in this embodiment of this application may be configured to perform the method of the network device in the embodiment corresponding to FIG. 2 or FIG. 3 in embodiments of this application. For example, the processing module 601 in the communication apparatus 60 is configured to determine configuration information, where the configuration information includes a set of random access resources for a random access feature, the set of random access resources includes a random access resource for a small data transmission SDT random access feature, and the configuration information is used by the terminal device to initiate random access-based small data transmission. The interface module 602 is configured to send the configuration information to the terminal device. Optionally, the random access feature includes at least one of the following: a reduced capability terminal device feature, a small data transmission SDT feature, a coverage enhancement feature, and a network slicing feature.

It should be noted that for another implementation of this embodiment, refer to the communication apparatus 50 in the embodiment corresponding to FIG. 5. Details are not described herein again.

In addition, this application provides a computer program product. The computer program product includes one or more computer instructions. When the computer program instructions are loaded and executed on a computer, all or some of the procedures or functions according to embodiments of this application are generated. For example, the method related to the network device in FIG. 2 or FIG. 3 is implemented. For another example, the method related to the terminal device in FIG. 2 or FIG. 3 is implemented. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital versatile disc (digital versatile disc, DVD)), a semiconductor medium (for example, a solid-state disk (solid-state disk, SSD)), or the like.

In addition, this application further provides a computer-readable storage medium. The storage medium stores a computer program, and the computer program is executed by a processor to implement the method related to the network device in FIG. 2 or FIG. 3.

In addition, this application further provides a computer-readable storage medium. The storage medium stores a computer program, and the computer program is executed by a processor to implement the method related to the terminal device in FIG. 2 or FIG. 3.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

## Claims

1. A random access report recording method, comprising:
receiving, by a terminal device, configuration information from a network device, wherein the configuration information comprises a set of random access resources for a random access feature, and the random access feature comprises at least one of the following: a reduced capability terminal device feature, a small data transmission SDT feature, a coverage enhancement feature, and a network slicing feature;
when one or more random access features comprising at least the small data transmission SDT feature meet a condition for triggering random access, initiating, by the terminal device, a random access procedure based on the configuration information; and
recording, by the terminal device, a first random access report, wherein the first random access report comprises information related to the random access procedure.

2. The method according to claim 1, wherein the configuration information further comprises priority information of at least one random access feature, the terminal device determines an available random access resource for the random access procedure based on the configuration information, and the random access resource is applicable to all or some of the one or more random access features comprising at least the SDT feature; and
the information related to the random access procedure comprises one or more of the following:
first indication information, wherein the first indication information indicates at least one random access feature triggering the random access procedure, and the at least one random access feature comprises the SDT feature;
the priority information of the at least one random access feature; and
second indication information, wherein the second indication information indicates a random access feature that is corresponding to the random access resource and that is determined by the terminal device.

3. The method according to claim 2, wherein the information related to the random access procedure further comprises any one or more of the following:
random access cell identifier information, random access frequency information, time-frequency domain configuration information, signal quality measurement information, indication information indicating that the signal quality measurement information meets a quality threshold, beam information for performing a random access attempt, a data volume to be transmitted during 2-step random access, and physical uplink shared channel PUSCH configuration information of the 2-step random access.

4. The method according to any one of claims 1 to 3, wherein the method further comprises:
sending, by the terminal device, third indication information to the network device, wherein the third indication information indicates whether the terminal device supports recording of an SDT-related random access report.

5. The method according to any one of claims 1 to 4, wherein the method further comprises:
receiving, by the terminal device, fourth indication information from the network device, wherein the fourth indication information indicates whether the terminal device records the SDT-related random access report.

6. The method according to claim 5, wherein the fourth indication information comprises a first threshold, and the first threshold is an upper limit of a number of first random access reports recorded by the terminal device; and
the recording, by the terminal device, a first random access report comprises:
recording, by the terminal device, the first random access report when a number of historical first random access reports recorded by the terminal device is less than the first threshold.

7. The method according to any one of claims 1 to 6, wherein the method further comprises:
sending, by the terminal device, fifth indication information to the network device, wherein the fifth indication information indicates availability of the first random access report.

8. The method according to claim 7, wherein the method further comprises:
receiving, by the terminal device, sixth indication information from the network device, wherein the sixth indication information indicates the terminal device to report the first random access report; and
sending, by the terminal device, the first random access report to the network device.

9. A random access report recording method, comprising:
sending, by a network device, configuration information to a terminal device, wherein the configuration information comprises a set of random access resources for a random access feature, the random access feature comprises at least one of the following: a reduced capability terminal device feature, a small data transmission SDT feature, a coverage enhancement feature, and a network slicing feature, and the configuration information is used by the terminal device to select a random access resource and initiate a random access procedure.

10. The method according to claim 9, wherein the configuration information further comprises priority information of at least one random access feature, the priority information of the random access feature is used to determine an available random access resource for the random access procedure based on the set of random access resources, and the random access resource is applicable to all or some of one or more random access features comprising at least the SDT feature; and
information related to the random access procedure comprises one or more of the following:
first indication information, wherein the first indication information indicates at least one random access feature triggering the random access procedure, and the at least one random access feature comprises the SDT feature;
the priority information of the at least one random access feature; and
second indication information, wherein the second indication information indicates a random access feature that is corresponding to the random access resource and that is determined by the terminal device.

11. The method according to claim 10, wherein the information related to the random access procedure further comprises any one or more of the following:
random access cell identifier information, random access frequency information, time-frequency domain configuration information, signal quality measurement information, indication information indicating that the signal quality measurement information meets a quality threshold, beam information for performing a random access attempt, a data volume to be transmitted during 2-step random access, and physical uplink shared channel PUSCH configuration information of the 2-step random access.

12. The method according to any one of claims 9 to 11, wherein the method further comprises:
receiving, by the network device, third indication information from the terminal device, wherein the third indication information indicates whether the terminal device supports recording of an SDT-related random access report.

13. The method according to any one of claims 9 to 12, wherein the method further comprises:
sending, by the network device, fourth indication information to the terminal device, wherein the fourth indication information indicates whether the terminal device records the SDT-related random access report.

14. The method according to claim 13, wherein the fourth indication information comprises a first threshold, and the first threshold is an upper limit of a number of first random access reports recorded by the terminal device.

15. The method according to any one of claims 9 to 14, wherein the method further comprises:
receiving, by the network device, fifth indication information from the terminal device, wherein the fifth indication information indicates availability of the first random access report.

16. The method according to claim 15, wherein the method further comprises:
sending, by the network device, sixth indication information to the terminal device, wherein the sixth indication information indicates the terminal device to report the first random access report; and
receiving, by the network device, the first random access report from the terminal device.

17. A communication apparatus, comprising a processor and a memory, wherein
the memory stores a computer program; and
the processor invokes the computer program, to enable the communication apparatus to perform the method according to any one of claims 1 to 8.

18. A communication apparatus, comprising a processor and a memory, wherein
the memory stores a computer program; and
the processor invokes the computer program, to enable the communication apparatus to perform the method according to any one of claims 9 to 16.

19. A computer-readable storage medium, storing instructions, wherein when the instructions are run on a computer, the computer is enabled to perform the method according to any one of claims 1 to 8, or perform the method according to any one of claims 9 to 16.
